# EUROPÄISCHE PATENTSCHRIFT

(11) **EP 3 629 991 B1**
(45) Veröffentlichungstag und Bekanntmachung des Hinweises auf die Patenterteilung: **21.07.2021**
(21) Anmeldenummer: 18734083.1
(22) Anmeldetag: 04.06.2018
(51) Int. Cl.: A61C 7/00, A61C 7/08, A61C 13/34

(54) **HERSTELLUNGSVERFAHREN FÜR EIN DENTALES HILFSMITTEL AUS EINER THERMOPLASTISCHEN KUNSTSTOFFFOLIE ODER -PLATTE**
PRODUCTION METHOD FOR A DENTAL AID MADE OF A THERMOPLASTIC FILM OR PLATE
PROCÉDÉ DE FABRICATION D'UN AUXILIAIRE DENTAIRE À PARTIR D'UNE FEUILLE OU D'UNE PLAQUE EN MATÉRIAU SYNTHÉTIQUE THERMOPLASTIQUE

(30) Priorität: 02.06.2017 DE 102017209403
(43) Veröffentlichungstag der Anmeldung: 08.04.2020
(73) Patentinhaber: Sirona Dental Systems GmbH, 64625 Bensheim (DE)
(72) Erfinder: SCHMIDT, Christian, 64625 Bensheim (DE); FORNOFF, Peter, 64385 Reichelsheim (DE)
(74) Vertreter: Dietz, Mirko
(86) Internationale Anmeldenummer: PCT/EP2018/064586
(87) Internationale Veröffentlichungsnummer: WO 2018/220221

(56) Entgegenhaltungen:
- EP-A1- 2 957 252
- DE-A1-102007 044 544
- DE-A1-102008 061 325
- KR-A- 20070 114 107

## Beschreibung

### Technisches Gebiet

Ein Verfahren und System zur Herstellung einer herausnehmbaren Dentalschiene aus einer thermoplastischen Kunststofffolie oder -platte, wobei die Kunststofffolie oder -platte innerhalb einer Tiefziehvorrichtung auf einem physischen Arbeitsmodell tiefgezogen und das dentale Hilfsmittel durch Trennen entlang einer Schnittlinie aus der tiefgezogenen Kunststofffolie oder -platte erzeugt wird.

### Stand der Technik

Aus der WO 2014/082624 A2 ist ein Verfahren zur Herstellung eines dentalen Hilfsmittels in einer Tiefziehvorrichtung bekannt, wobei ein Arbeitsmodell eines Oberkiefers und/oder Unterkiefers in die Tiefziehvorrichtung eingesetzt und auf das Arbeitsmodell eine Tiefziehfolie aufgesetzt und zu einer Schiene tiefgezogen wird. Das Arbeitsmodell wird computergestützt anhand von biometrischen Daten des Ober- und/oder Unterkiefers erzeugt.

In der WO 2010/043419 A1 wird ein Herstellungsverfahren für eine mehrschichtige Dentalschiene beschrieben.

Geeignete thermoplastische Kunststoffe bzw. Tiefziehfolien oder -platten für dentale Hilfsmittel sind beispielsweise aus der DE 10 2011 113 694 A1 oder der EP 2 417 927 A1 bekannt. Ein besonders zeitintensiver Schritt bei der Herstellung eines durch Tiefziehen zu erzeugenden dentalen Hilfsmittels ist das Heraustrennen, z.B. Herausschneiden, des dentalen Hilfsmittels aus der tiefgezogenen Kunststofffolie oder -platte. Zusätzlich bedarf es besonderen Geschicks und Erfahrung, um diesen Schritt fehlerfrei und mit einem zufriedenstellenden Ergebnis auszuführen.

EP2957252A1 offenbart ein Verfahren zur Herstellung eines dreidimensionalen Echtmodells der Ist-Stellung von wenigstens zwei Zähnen eines Patienten.

DE102007044544A1 offenbart eine Applikationsschiene mit Abdichtungsrand an der Wirkstoffkammer für den Ober- und Unterkiefer.

DE102008061325A1 offenbart ein Verfahren zur Herstellung einer mehrschichtigen Dentalschiene in einem Tiefziehgerät und Dentalschiene.

KR20070114107A offenbart eine kieferorthopädische Vorrichtung und ein Verfahren.

Aufgabe der vorliegenden Erfindung ist es, die bekannten Verfahren weiterzubilden und insbesondere ein zuverlässigeres und schnelleres Herstellungsverfahren bereitzustellen.

### Darstellung der Erfindung

Diese Aufgabe wurde durch das Herstellungsverfahren gemäß Anspruch 1 und ein System gemäß Anspruch 6 gelöst. Dentale Hilfsmittel bezeichnen hier herausnehmbare Kunststoffteile bzw. -schienen, welche zumindest teilweise an die Form des Oberkiefers und/oder des Unterkiefers angepasst sind, beispielsweise Knirscherschienen, Korrekturschienen, wie Retainer oder Aligner, Mundschutzschienen, Bleichschienen oder Schnarchschienen sowie temporäre Brücken auf Schienenbasis.

Das dentale Hilfsmittel, im Falle vorliegender Erfindung eine Dentalschiene, wird durch einen Umformprozess, das sogenannte Tiefziehen, aus thermoplastischen Kunststoffen hergestellt. Das Tiefziehen, auch als Thermoformen, Warmformen oder Vakuumtiefziehen bezeichnet, ist ein Verfahren zur Umformung thermoplastischer Kunststoffe. Man unterscheidet die Thermoformverfahren typischerweise nach dem jeweils eingesetzten Halbzeug, wobei dünnere Halbzeuge Folien und dickere Halbzeuge ab ca. 1,5 mm Platten genannt werden. In der Dentaltechnik werden typischerweise Ronden mit einer Stärke von 0,5 mm bis 5 mm verwendet, wobei die Materialstärke des resultierenden Produkts eines Tiefziehvorgangs aufgrund von Materialstreckung zumindest abschnittsweise geringer ist.

Als Formvorlage für den Umformprozess dient ein zahntechnisches Modell, das sogenannten Arbeitsmodell, welches erfindungsgemäß nach einem digitalen Arbeitsmodells erzeugt wird, z.B. mittels rechnergestützter Fertigung (CAM).

Das digitale Arbeitsmodell wird auf Basis eines die Form des Oberkiefers und/oder des Unterkiefers oder zumindest eines Teils des Oberkiefers und/oder Unterkiefers wiedergebenden dreidimensionalen Datensatzes erzeugt und erfindungsgemäß um eine Hilfsstruktur ergänzt.

Der dreidimensionale Datensatz des Oberkiefers/Unterkiefers wird beispielsweise durch Abformung im Mund eines Patienten und späteres Vermessen der Abformung oder eines Positivmodells der Abformung oder durch direktes intraorales optisches Vermessen des Oberkiefers und/oder Unterkiefers, z.B. mittels einer Intraoralkamera ermittelt.

Das Erzeugen des digitalen Arbeitsmodells anhand des dreidimensionalen Datensatzes erfolgt automatisch und/oder mittels manueller Eingabemittel.

Das Trennen des dentalen Hilfsmittels aus der tiefgezogenen Kunststofffolie oder -platte erfolgt manuell mittels eines Werkzeugs. Durch die Hilfsstruktur ist ein kontrolliertes Abtrennen entlang der Hilfsstruktur möglich, welches auf besonders einfache und schnelle Weise zuverlässig auch durch ungeübte Anwender ausführbar ist. Hierdurch werden Neuanfertigungen vermieden, die durch Bearbeitungsfehler beim manuellen Trennen ohne erfindungsgemäße Hilfsstruktur häufiger notwendig werden.

Ist die Hilfsstruktur als Erhöhung ausgebildet, so wird zum Trennen ein zerspanendes Werkzeug an die Hilfsstruktur und dann entlang der Hilfsstruktur geführt. Hierdurch erhält das dentale Hilfsmittel eine nach außen zeigende, scharfe Schnittkante, wodurch eine Verletzungsgefahr von Zahnfleisch bei Einsetzen des hergestellten dentalen Hilfsmittels zuverlässig vermieden werden kann.

Mit einer als Vertiefung ausgebildeten Hilfsstruktur wird eine Führungsrinne für das Werkzeug bereitgestellt. Vorteilhafterweise ist eine Breite der Vertiefung im Querschnitt auf einen Durchmesser des für das Trennen zu verwendenden Werkzeugs abgestimmt. Besonders vorteilhaft weist das Werkzeug einen nach außen abnehmenden Durchmesser auf und die Breite der Vertiefung ist besonders vorteilhaft kleiner als der größte Durchmesser des Werkzeugs.

Die Hilfsstruktur verläuft erfindungsgemäß entlang des Schnittlinienmodells.

Je nach Breite und Ausführung der Hilfsstruktur sowie je nach Art des für das Trennen verwendeten Werkzeugs verschiebt sich die Lage der tatsächlich erhaltenen Schnittkante im Bezug auf die Hilfsstruktur. Entsprechend ist es vorteilhaft dies bei der Positionierung der Hilfsstruktur entsprechend zu berücksichtigen.

Vorteilhafterweise wird die Gingivalinie in dem digitalen Arbeitsmodell automatisch und/oder manuell ermittelt. Erfindungsgemäß wird in einem festen Abstand in Richtung der Gingiva parallel zu der Gingivalinie eine Hilfslinie erzeugt und als Schnittlinienmodell verwendet.

Für viele Anwendungen bzw. dentale Hilfsstrukturen ist ein Verlauf der Schnittlinie möglichst nah an der Gingivalinie wünschenswert. Durch eine im Abstand zur Gingivalinie verlaufende Schnittlinie werden beim Tragen des dentalen Hilfsmittels beispielsweise Druckstellen im Bereich der Gingiva vermieden. Ein besonders einfaches Trennen und gegebenenfalls Weiterverarbeiten ist mit einer geraden Schnittlinie gemäß einem Ausführungsbeispiel möglich. Vorteilhafterweise weist die Hilfsstruktur einen runden, n-eckigen oder spitz zulaufenden Querschnitt auf.

Die Erfindung betrifft weiterhin ein System zur Herstellung eines dentalen Hilfsmittels gemäß Anspruch 6.

Dabei weist das System ein Softwareprogramm auf wobei das Softwareprogramm auf der Recheneinheit ausführbar ist, das Softwareprogramm mindestens ein digitales Werkzeug aufweist, das digitale Werkzeug mittels mindestens eines Eingabemittels bedienbar ist und das digitale Werkzeug das Ergänzen der Hilfsstruktur in dem digitalen Arbeitsmodell ermöglicht.
Kurzbeschreibung der Zeichnungen Ausführungsbeispiele der Erfindung sind in der Zeichnung dargestellt. Es zeigt die
- Fig. 1: eine schematische Darstellung des erfindungsgemäßen Verfahrens,
- Fig. 2: eine schematische Ansicht eines digitalen Arbeitsmodells,
- Fig. 3A,B: schematische Schnittbilder des Arbeitsmodells gemäß verschiedener Ausführungsformen,
- Fig. 4A-C: schematische Ansichten der Hilfsstruktur gemäß verschiedener Ausführungsformen.

### Ausführungsbeispiele

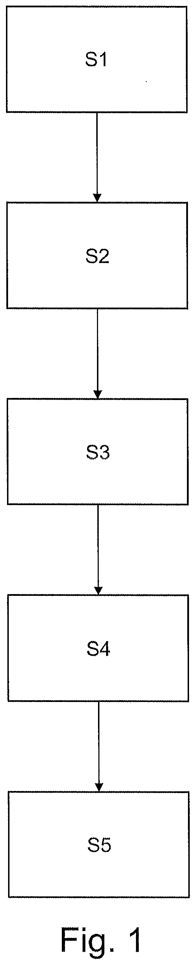

Die Fig. 1 zeigt eine schematische Darstellung des erfindungsgemäßen Verfahrens gemäß einer ersten Ausführungsform mit Verfahrensschritten S1 bis S5.

In dem ersten Verfahrensschritt S1 wird der mit einem dentalen Hilfsmittel, hier einer Dentalschiene, zu versorgende Kieferbereich digital erfasst. Hierfür wird mittels einer Messvorrichtung, z.B. einer intraoralen Kamera, ein dreidimensionaler Datensatz eines Unterkiefers oder eines Oberkiefers oder zumindest eines Teils des Unterkiefers oder des Oberkiefers erzeugt und auf einem geeigneten Speichermedium einer Recheneinheit gespeichert.

Aus dem im Verfahrensschritt S1 erzeugten Datensatz wird im zweiten Verfahrensschritt S2 rechnergestützt ein digitales Arbeitsmodell erzeugt. Das digitale Arbeitsmodell entspricht im Wesentlichen dem dreidimensionalen Datensatz und umfasst zusätzlich eine als Erhöhung oder Vertiefung ausgebildete Hilfsstruktur, wobei die Hilfsstruktur während des Verfahrensschritts S2 mittels der Recheneinheit entworfen und angeordnet wird.

In einem dritten Verfahrensschritt S3 wird ein physisches Arbeitsmodell entsprechend dem im zweiten Verfahrensschritt S2 erzeugten digitalen Arbeitsmodell erzeugt, z.B. mittels einer Fräs- und/oder Schleifvorrichtung oder mittels eines 3D-Druckers.

In einem vierten Verfahrensschritt S4 wird eine thermoplastische Kunststofffolie oder -platte mittels einer Tiefziehvorrichtung auf dem physischen Arbeitsmodell tiefgezogen.

In einem fünften Verfahrensschritt wird die tiefgezogene Kunststofffolie oder -platte mittels eines Werkzeugs entlang der Hilfsstruktur getrennt.

Handelt es sich bei der Hilfsstruktur um eine Erhöhung, so wird hierfür zumindest eine Spitze oder Kuppe der Erhöhung und der darüber gezogene Teil der Kunststofffolie oder - platte mittels eines Fräs- oder Schleifwerkzeugs entfernt. Handelt es sich bei der Hilfsstruktur um eine Vertiefung, so wird ein Fräs- oder Schleifwerkzeug zumindest teilweise in die Vertiefung hinein geführt, um die Kunststofffolie oder - platte entlang der Hilfsstruktur zu zertrennen.

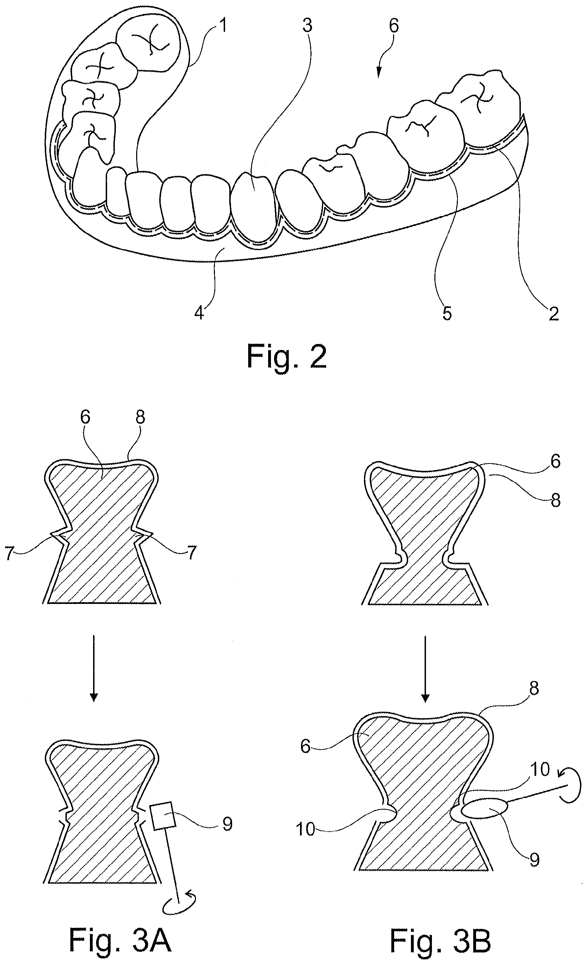

Fig. 2 zeigt eine schematische Ansicht eines dreidimensionalen Datensatzes 1 eines Unterkiefers. Gemäß einer zweiten Ausführungsform wird als Entwurf einer Schnittlinie 2 eine Grenzlinie zwischen den Zähnen 3 und dem Zahnfleisch 4 automatisch ermittelt und in einem festen Abstand A zu dem Schnittlinienentwurf 2 eine Hilfsstruktur 5 automatisch angeordnet. Der dreidimensionale Datensatz 1 bildet zusammen mit der Hilfsstruktur 5 ein digitales Arbeitsmodell 6.

Wie in Fig. 3A schematisch dargestellt ist die Hilfsstruktur 5 gemäß einer ersten alternativen Ausführungsform als Erhöhung 7 auf dem Arbeitsmodell 6 ausgebildet. Die Erhöhung 7 wird nach dem Tiefziehprozess zusammen mit der darüber gezogenen Kunststofffolie oder -platte 8 mittels eines Werkzeugs 9 beispielsweise durch Schleifen oder Fräsen zumindest teilweise entfernt.

Wie in Fig. 3B schematisch dargestellt ist die Hilfsstruktur 5 gemäß einer zweiten alternativen Ausführungsform als eine in das Arbeitsmodell 6 hineinragende Vertiefung 10 ausgebildet. Nach dem Tiefziehprozess wird die Kunststofffolie oder - platte 8 mittels eines Werkzeugs 9 entlang der Vertiefung 10 zertrennt, indem das Werkzeug 9 zumindest teilweise in die Vertiefung 10 hinein geführt wird.

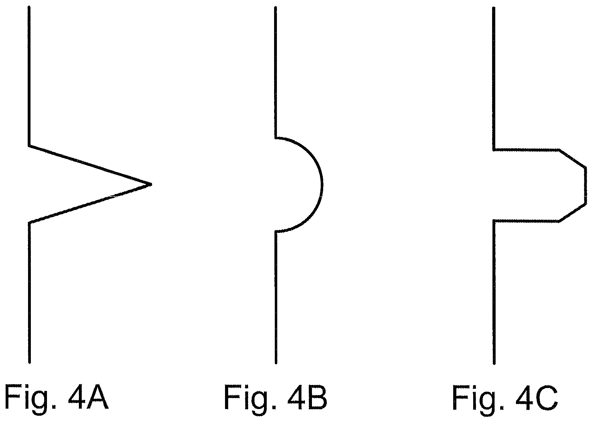

Unterschiedliche Ausführungsformen eines Querschnitts der Hilfsstruktur sind in Fig. 4A-C skizziert, nämlich spitz zulaufend, abgerundet oder n-eckig.

### Bezugszeichenliste

- 1: dreidimensionaler Datensatzes
- 2: Schnittlinie
- 3: Zähne
- 4: Zahnfleisch
- 5: Hilfsstruktur
- 6: digitales Arbeitsmodell
- 7: Erhöhung
- 8: tiefgezogene Kunststofffolie oder -platte
- 9: Werkzeug
- 10: Vertiefung

## Patentansprüche

1. Herstellungsverfahren für eine herausnehmbare Dentalschiene aus einer
thermoplastischen Kunststofffolie oder -platte (8), wobei
- die Dentalschiene zumindest teilweise an die Form des Oberkiefers und/oder des Unterkiefers angepasst ist, wobei
- anhand eines dreidimensionalen Datensatzes (1) zumindest eines Teils eines Oberkiefers und/oder Unterkiefers ein digitales dreidimensionales Arbeitsmodell (6) rechnergestützt erzeugt wird,
- die Gingivalinie in dem digitalen Arbeitsmodell automatisch und/oder manuell ermittelt, in einem festen Abstand in Richtung der Gingiva parallel zu der Gingivalinie eine Hilfslinie erzeugt und als Schnittlinienmodell verwendet wird,
- vor der Herstellung des physischen Arbeitsmodells das digitale Arbeitsmodell (6) automatisch und/oder mittels manueller Eingabemittel um eine Hilfsstruktur (5) ergänzt wird, wobei
- die Hilfsstruktur als Erhöhung (7) oder Vertiefung (10)ausgebildet ist,
- die Hilfsstruktur (8) entlang des digitalen Schnittlinienmodells in dem Arbeitsmodell verläuft,
- ein physisches Arbeitsmodell entsprechend dem ergänzten digitalen Arbeitsmodell (6) hergestellt wird,
- die Kunststofffolie oder -platte (8) innerhalb einer Tiefziehvorrichtung auf dem physischen Arbeitsmodell tiefgezogen wird und
- die Dentalschiene durch Trennen entlang einer Schnittlinie (2)aus der tiefgezogenen Kunststofffolie oder - platte (8) erzeugt wird,
- die Dentalschiene mittels eines zerspanenden Werkzeugs (9) aus der tiefgezogenen Kunststofffolie oder -platte (8) manuell herausgetrennt wird, wobei das Werkzeug (9) die Hilfsstruktur (5) zumindest teilweise abträgt oder bei dem Trennen zumindest teilweise in die Hilfsstruktur (5) hineingreift.

2. Herstellungsverfahren nach Anspruch 1, **dadurch gekennzeichnet, dass** die Hilfsstruktur einen runden, n-eckigen oder spitz zulaufenden Querschnitt aufweist.

3. System zur Herstellung einer Dentalschiene aus einer thermoplastischen Kunststofffolie oder - platte, aufweisend eine Tiefziehvorrichtung und eine Recheneinheit, weiterhin aufweisend Mittel zum Herstellen eines physischen Arbeitsmodells und zerspanendes Werkzeug zum Trennen der Dentalschiene an der Schnittlinie, **dadurch gekennzeichnet, dass** das System dazu ausgelegt ist, das Herstellungsverfahren gemäß einem der vorangegangenen Ansprüche auszuführen, wobei das Trennen der Dentalschiene an der Schnittstelle jedoch manuell erfolgt.

4. System nach Anspruch 3, **dadurch gekennzeichnet, dass** das System ein Softwareprogramm aufweist, wobei
- das Softwareprogramm auf der Recheneinheit ausführbar ist,
- das Softwareprogramm mindestens ein digitales Werkzeug aufweist,
- das digitale Werkzeug mittels mindestens eines Eingabemittels bedienbar ist,
- das digitale Werkzeug dazu ausgelegt ist, die Hilfsstruktur in dem digitalen Arbeitsmodell zu ergänzen.

## Claims

1. A production method for a removable dental splint made of a thermoplastic film or plate (8),
wherein
- the dental splint is at least partially adapted to the shape of the upper jaw and/or lower jaw, wherein
- on the basis of a three-dimensional data set (1) of at least one part of an upper jaw and/or lower jaw a digital three-dimensional working model (6) is created in a computer-aided manner,
- the gingival line is determined automatically and/or manually in the digital working model, an auxiliary line is created at a fixed distance in the direction of the gingiva, parallel to the gingival line, and is used as a cutting line model,
- the digital working model (6) is supplemented by an auxiliary structure (5) automatically or by way of manual input means before the physical working model is produced, wherein
- the auxiliary structure is formed as an elevation (7) or depression (10),
- the auxiliary structure (8) extends along the digital cutting line model in the working model,
- a physical working model is produced in accordance with the supplemented digital working model (6),
- the plastic film or plate (8) is deep-drawn on the physical working model within a deep-drawing device and
- the dental splint is created from the deep-drawn plastic film or plate (8) by means of separation along a cutting line (2),
- the dental splint is manually separated from the deep-drawn plastic film or plate (8) using a cutting tool (9), wherein the tool (9) at least partially removes the auxiliary structure (5) or at least partially reaches into the auxiliary structure (5) during the separation.

2. The production method according to claim 1, **characterised in that** the auxiliary structure has a round, n-cornered or tapered cross-section.

3. A system for producing a dental splint from a thermoplastic film or plate, comprising a deep-drawing device and a computing unit, further comprising means for producing a physical working model and cutting tool for separating the dental splint on the cutting line,
**characterised in that**
the system is designed to carry out the production method according to any one of the preceding claims, wherein, however, the separation of the dental splint at the cutting point takes place manually.

4. The system according to claim 3, **characterised in that** the system has a software program,
wherein
- the software program is executable on the computing unit,
- the software program has at least one digital tool,
- the digital tool can be operated by way of at least one input means,
- the digital tool is designed to supplement the auxiliary structure in the digital working model.

## Revendications

1. Procédé de fabrication d'une gouttière dentaire amovible à partir d'une feuille ou d'une plaque en matière thermoplastique (8), dans lequel
- la gouttière dentaire est au moins partiellement ajustée à la forme de la mâchoire supérieure et/ou de la mâchoire inférieure, dans lequel
- en à l'aide d'un jeu de données (1) tridimensionnelles d'au moins une partie d'une mâchoire supérieure et/ou d'une mâchoire inférieure, un modèle de travail (6) numérique tridimensionnel est généré de manière assistée par ordinateur,
- la ligne gingivale est déterminée automatiquement et/ou manuellement dans le modèle de travail numérique, une ligne auxiliaire est générée à une distance fixe dans la direction de la gencive parallèlement à la ligne gingivale et utilisée comme modèle de ligne de coupe,
- avant la fabrication du modèle de travail physique, le modèle de travail (6) numérique est complété automatiquement et/ou par utilisation d'un moyen de saisie manuelle par une structure auxiliaire (5), dans lequel
- la structure auxiliaire est conçue sous la forme d'une élévation (7) ou d'un évidement (10),
- la structure auxiliaire (8) s'étend le long du modèle de ligne de coupe numérique dans le modèle de travail,
- un modèle de travail physique est fabriqué selon le modèle de travail (6) numérique complété,
- la feuille ou la plaque en matière plastique (8) est emboutie dans un dispositif d'emboutissage sur le modèle de travail physique et
- la gouttière dentaire est fabriquée par découpe le long d'une ligne de coupe (2) à partir de la feuille ou de la plaque en matière plastique (8) emboutie,
- la gouttière dentaire est séparée manuellement au moyen d'un outil (9) d'usinage par enlèvement de copeaux de la feuille ou de la plaque en matière plastique (8) emboutie, dans lequel l'outil (9) enlève au moins partiellement la structure auxiliaire (5) ou, lors de la séparation, pénètre au moins partiellement avec la structure auxiliaire (5).

2. Procédé de fabrication selon la revendication 1, **caractérisé en ce que** la structure auxiliaire comporte une section transversale ronde, à n angles ou se terminant en pointe.

3. Système de fabrication d'une gouttière dentaire à partir d'une feuille ou d'une plaque en matière thermoplastique, comprenant un dispositif d'emboutissage et une unité de calcul, comprenant en outre un moyen de fabrication d'un modèle de travail physique et un outil d'usinage par enlèvement de copeaux pour séparer la gouttière dentaire au niveau de la ligne de coupe,
**caractérisé en ce que**
ledit système est conçu pour mettre en œuvre le procédé de fabrication selon l'une quelconque des revendications précédentes, dans lequel la séparation de la gouttière est cependant effectuée manuellement au point de coupe.

4. Système selon la revendication 3, **caractérisé en ce que** ledit système comporte un logiciel, dans lequel
- le logiciel peut être exécuté sur l'unité de calcul,
- le logiciel comporte au moins un outil numérique,
- l'outil numérique peut être actionné au moyen d'au moins un moyen de saisie,
- l'outil numérique est conçu pour compléter la structure auxiliaire dans le modèle de travail numérique.
